# EUROPÄISCHE PATENTSCHRIFT

(11) **EP 1 569 831 B1**
(45) Veröffentlichungstag und Bekanntmachung des Hinweises auf die Patenterteilung: **17.01.2007**
(21) Anmeldenummer: 03785711.7
(22) Anmeldetag: 02.12.2003
(51) Int. Cl.: B60T 7/04, G05G 1/14

(54) **PEDALSIMULATIONSEINRICHTUNG**
SIMULATION DEVICE FOR A PEDAL
DISPOSITIF DE SIMULATION DE PEDALE

(30) Priorität: 13.12.2002 DE 10260008
(43) Veröffentlichungstag der Anmeldung: 07.09.2005
(73) Patentinhaber: Lucas Automotive GmbH, 56070 Koblenz (DE)
(72) Erfinder: GIERING, Wilfried, 56743 Mendig (DE); MICHELS, Erwin, 56829 Kail (DE); OHLIG, Benedikt, 56179 Vallendar (DE); STEINHEUER, Herbert, 53474 Bad Neuenahr (DE)
(74) Vertreter: Thum, Bernhard
(86) Internationale Anmeldenummer: PCT/EP2003/013583
(87) Internationale Veröffentlichungsnummer: WO 2004/054861

(56) Entgegenhaltungen:
- EP-A- 0 771 705
- EP-A- 1 142 766
- DE-A- 10 039 670
- DE-C- 19 638 102

## Beschreibung

Die Erfindung betrifft eine Pedalsimulationsvorrichtung zum Simulieren des Rückwirkverhaltens eines Pedals, insbesondere eines Bremspedals einer Fahrzeugbremsanlage, mit einem Zylinder, einem innerhalb des Zylinders verschiebbar angeordneten Kolben, welcher mit dem Pedal gekoppelt ist und welcher eine Arbeitskammer innerhalb des Zylinders begrenzt, einem Rückstellelement, welches in der Lage ist eine Rückstellkraft auf das Pedal auszuüben; und einer Modelliereinrichtung zum Beeinflussen des Rückwirkverhaltens des Pedals, welche mit der Arbeitskammer fluidisch verbunden ist.

Derartige Pedalsimulationsvorrichtungen werden bereits bei Fahrzeugen eingesetzt, bei welchen eine elektrohydraulische Bremsanlage oder eine elektromotorische Bremsanlage von der Bremskrafterzeugung vermittels eines Bremspedals entkoppelt ist. Man spricht bei derartigen Bremsanlagen von "Brake-by-Wire" Fahrzeugbremsanlagen, da die eigentliche die Bremswirkung hervorrufende elektrohydraulische oder elektromotorische Bremsanlage mechanisch von dem die Bremsung initiierenden Bremspedal entkoppelt ist. Vielmehr wird eine Bremspedal-Betätigung anhand verschiedener Parameter, wie beispielsweise dem aktuellen Bremspedalweg oder der auf das Bremspedal aufgebrachten Kraft sowie der Bremspedalbeschleunigung, vermittels geeigneter Sensoren elektronisch erfasst und anhand der erfassten Größen die jeweilige Bremsanlage angesteuert. Um dennoch dem Fahrer eines Kraftfahrzeugs eine ihm wohlbekannte mechanische Bremspedalcharakteristik zu vermitteln, bei welcher das Bremspedal bei dessen Betätigung mit zunehmendem Hub einen größer werdenden Widerstand gegen eine weitere Betätigung vorsieht und bei welcher sich das Bremspedal entsprechend einer Hysterese bei dessen Freigabe gedämpft in seine Ausgangsstellung zurückbewegt, werden die Pedalsimulationsvorrichtungen der eingangs bezeichneten Art eingesetzt.

Eine derartige Pedalsimulationsvorrichtung ist beispielsweise aus der DE 100 39 670 A1 bekannt. Bei dieser Pedalsimulationsvorrichtung wird bei Betätigung des Bremspedals der mit diesem über eine Verbindungsstange gekoppelte Kolben in dem Zylinder verschoben. Dabei wird aus einer von dem Zylinder und dem Kolben eingeschlossenen Arbeitskammer Gas durch eine Drosseleinrichtung gedrückt. Mit Hilfe der Drosseleinrichtung kann das Ausströmverhalten des Gases beeinflusst werden und damit der Widerstand, welcher sich bei einer Bewegung des Kolbens innerhalb des Zylinders ergibt. Es hat sich jedoch gezeigt, dass die Pedalsimulationsvorrichtung gemäß diesem Stand der Technik ein verhältnismäßig träges Ansprechverhalten aufweist. Dies rührt daher, dass sich der Kolben aufgrund der hohen Kompressibilität des Gases verhältnismäßig weit innerhalb des Zylinders bewegen kann, ohne dass dieser Bewegung aufgrund der Kompression des Gases und der Wirkung der Drossel ein hinreichend starker und für den Fahrer des Kraftfahrzeugs spürbarer Widerstand entgegengesetzt wird. Erst nachdem der Kolben um einen beträchtlichen Weg verschoben wurde, ist die Druckerhöhung innerhalb des Zylinders ausreichend, so dass ein spürbarer Widerstand gegen die Pedalbetätigung erzeugt wird. Der Fahrer hat demnach den unerwünschten Eindruck, dass die Bremsanlage erst verhältnismäßig spät aktiv wird.

Aus der DE 197 55 481 C2 ist eine zu dem vorstehend beschriebenen Stand der Technik ähnliche Pedalsimulationsvorrichtung bekannt. Diese sieht vor, dass bei einer Betätigung des Bremspedals das zwischen dem Kolben und dem Zylinder eingeschlossene Gas im Wesentlichen ungehindert über ein Rückschlagventil aus der Arbeitskammer austreten kann, wobei über eine Feder ein Widerstand gegen die Pedalbewegung aufgebracht wird. Bei der Rückstellbewegung des Pedals wirkt hingegen ein Drosselelement, durch welches in die von dem Kolben und dem Zylinder eingeschlossene Arbeitskammer verzögert Gas eintreten kann, so dass der Bewegung des Bremspedal eine Hysterese auferlegt wird und sich dieses unter Wirkung der Rückstellfeder gedämpft in seine Ausgangsstellung zurückbewegen kann. Allerdings weicht die Bewegungscharakteristik dieser Pedalsimulationsvorrichtung von dem gewünschten Verhalten stark ab, insbesondere wegen der Feder, welche dem Fahrer einen konstant bleibenden Widerstand gegen seine Pedalbetätigung vermittelt.

Ferner ist aus der EP 0 771 705 B1 eine Bremspedalsimulationseinrichtung bekannt, bei welcher sich der Kolben in einem beidseitig geschlossenen Zylinder bewegt, so dass der Kolben beidseitig jeweils eine Arbeitskammer begrenzt. In dem Kolben ist eine Bohrung vorgesehen, welche einen Gasaustausch zwischen den beiden Kammern innerhalb des Zylinders ermöglicht. Bei Betätigung des Bremspedals bewegt sich der Kolben innerhalb des Zylinders, wobei Gas von der einen Arbeitskammer durch den Kolben in die andere Arbeitskammer strömen kann. Dies führt allerdings zu einer unzureichenden Dämpfung der Kolbenbewegung, so dass die sich ergebende Bremspedalcharakteristik von der dem Fahrer zu vermittelnden stark abweicht.

Aus der DE 196 38 102 C1 ist schließlich eine hydraulische Fahrzeugbremsanlage bekannt, bei welcher der Grundgedanke der Entkopplung des Bremspedals von der eigentlichen Bremsanlage realisiert ist.

Es ist Aufgabe der vorliegenden Erfindung, eine Pedalsimulationsvorrichtung der eingangs bezeichneten Art bereitzustellen, welche bei einfachem Aufbau und zuverlässigem Betrieb schnell anspricht und eine gegenüber dem Stand der Technik verbesserte Pedalcharakteristik aufweist.

Diese Aufgabe wird durch eine Pedalsimulationsvorrichtung zum Simulieren des Rückwirkverhaltens eines Pedals, insbesondere eines Bremspedals einer Fahrzeugbremsanlage gelöst, mit einem Zylinder, einem innerhalb des Zylinders verschiebbar angeordneten Kolben, welcher mit dem Pedal gekoppelt ist und welcher eine Arbeitskammer innerhalb des Zylinders begrenzt, einem Rückstellelement, welches in der Lage ist eine Rückstellkraft auf das Pedal auszuüben, und einer Modelliereinrichtung zum Beeinflussen des Rückwirkverhaltens des Pedals, welche mit der Arbeitskammer fluidisch verbunden ist. Bei dieser Pedalsimulationsvorrichtung ist erfindungsgemäß vorgesehen, dass sich bei einer Betätigung des Pedals ein Unterdruck in der Arbeitskammer aufbaut.

Der sich bei Betätigung des Bremspedals in der Arbeitskammer aufbauende Unterdruck hängt von dem Verhalten der Modelliereinrichtung ab und ist mittels eines die Modelliereinrichtung durchströmenden Fluids abbaubar. Aufgrund des vorzugsweise verhältnismäßig kleinen (Tot-)Volumens der Arbeitskammer zu Beginn der Betätigung des Pedals kann dieser Unterdruck in relativ kurzer Zeit der Pedalbetätigung, d.h. nach relativ kurzem Betätigungsweg, einen verhältnismäßig großen Wert annehmen, so dass die Pedalsimulationsvorrichtung schnell anspricht. Die Modelliereinrichtung lässt dann lediglich ein beschränktes Nachströmen von Fluid in die Arbeitskammer zu, so dass sich das Pedal nur unter angemessenem Widerstand betätigen lässt. Bei Freigabe des Pedals wird dieses von dem beliebig konfigurierbaren Rückstellelement in seine Ausgangsstellung zurückgeführt, wobei diese Rückstellbewegung ebenfalls von der Modelliereinrichtung beeinflussbar ist.

Als Fluid können erfindungsgemäß geeignete Flüssigkeiten, wie beispielsweise Bremsflüssigkeit oder Glycerin verwendet werden. Die Erfindung eignet sich jedoch insbesondere auch für den Einsatz in einer pneumatischen Anlage, so dass als Fluid ein Gas bzw. Gasgemisch, insbesondere Luft, verwendet werden kann, dessen Kompressibilität und Expansionsfähigkeit ausgenutzt wird. Im folgenden wird daher die Erfindung insbesondere hinsichtlich der Verwendung eines gasförmigen Fluids diskutiert.

Erfindungsgemäß kann vorgesehen sein, dass die Modelliereinrichtung die Arbeitskammer mit der Umgebungsatmosphäre verbindet. Alternativ hierzu kann auch vorgesehen sein, dass die Modelliereinrichtung die Arbeitskammer mit einem gegenüber der Umgebungsatmosphäre abgetrennten oder abtrennbaren Fluidspeicher verbindet. Es ist zweckmäßig, dass das Fluid bei der Betätigung des Pedals von außerhalb des Zylinders in die Arbeitskammer einströmt.

Zur Erzielung der Dämpfungswirkung der Modelliereinrichtung kann erfindungsgemäß vorgesehen sein, dass diese wenigstens einen Drosselkanal mit einer Drosseleinrichtung umfasst. Dabei kann es sich um eine vorkonfigurierte Drosseleinrichtung handeln. Bei einer Weiterbildung der Erfindung ist hingegen vorgesehen, dass die Drosseleinrichtung verstellbar ist. Die Drosseleinrichtung kann manuell bei der erstmaligen Montage und der Wartung der Bremsanlage verstellt werden. Gleichermaßen ist es jedoch möglich, die Drosseleinrichtung auch aktiv während des Betriebs der Fahrzeugbremsanlage anzusteuern und zu verstellen, beispielsweise derart, dass in Abhängigkeit von verschiedenen Betriebszuständen der Bremsanlage oder Fahrsituationen die Drosseleinrichtung unterschiedliche Zustände einnehmen kann und somit dem Fahrer auch jeweils in Abhängigkeit von dem Betrieb der Fahrzeugbremsanlage unterschiedliche Bremscharakteristiken vermitteln kann.

Ferner kann in einer Weiterbildung der Erfindung die Modelliereinrichtung einen Bypass-Kanal umfassen, welcher den Drosselkanal umgeht. So ist es möglich, dass bei einer Freigabe des Pedals nach dessen Betätigung unter der Wirkung des Rückstellelements Fluid aus der Arbeitskammer über den Bypasskanal ausströmt. Dies bedeutet, dass einer Betätigung des Pedals wegen der Drosseleinrichtung ein angemessen großer Widerstand entgegenwirkt, dass jedoch bei Freigabe des Pedals nach vorheriger Betätigung die Drosseleinrichtung im Wesentlichen umgangen werden kann, so dass die Rückstellbewegung unter deutlich geschwächter Dämpfung und damit letztendlich schneller erfolgen kann. Der Pedalbewegung wird also eine Hysterese auferlegt. Dies kann beispielsweise dadurch erreicht werden, dass der Bypass-Kanal ein Rückschlagventil aufweist, welches ein Austreten von Fluid aus der Arbeitskammer im wesentlichen ungehindert zulässt und ein Eintreten von Fluid in die Arbeitskammer blockiert. Der Einsatz eines Rückschlagventils hat den Vorteil, dass dieses ein verhältnismäßig einfaches und daher kostengünstig verfügbares Bauteil mit zuverlässigem Betrieb ist.

In einer Weiterbildung der erfindungsgemäßen Pedalsimulationsvorrichtung ist vorgesehen, dass der Zylinder an seinem von der Arbeitskammer entfernten Ende verschlossen ist und zusammen mit dem Kolben eine Komplementärarbeitskammer einschließt und dass bei einer Betätigung des Bremspedals Fluid aus der Komplementärarbeitskammer durch die Modelliereinrichtung hindurch aus dem Zylinder strömt. Diese Maßnahme sieht vor, dass zusätzlich zu der Arbeitskammer eine weitere Arbeitskammer, nämlich die Komplementärarbeitskammer, vorgesehen ist, mit welcher das Verhalten des Bremspedals weiter beeinflusst werden kann. Die Modelliereinrichtung umfasst demnach Komponenten, welche der Arbeitskammer zugeordnet sind, und weitere Komponenten, welche der Komplementärarbeitskammer zugeordnet sind.

Wenn in diesem Zusammenhang von Modelliereinrichtung die Rede ist, so soll dieser Begriff nicht zwingend bedeuten, dass alle zur Beeinflussung des Rückwirkverhaltens des Pedals vorgesehenen Komponenten in einer gemeinsamen Baugruppe zusammengefasst sind. Vielmehr soll der Begriff Modelliereinrichtung ein Oberbegriff für diejenigen Komponenten sein, welche das Rückwirkverhalten des Pedals beeinflussen können, unabhängig davon, ob diese zu einer gemeinsamen Baugruppe zusammengefasst oder jeweils separat der Arbeitskammer oder der Komplementärarbeitskammer zugeordnet sind.

Auch hinsichtlich der Komplementärarbeitskammer kann vorgesehen sein, dass diese über die Modelliereinrichtung mit der Umgebungsatmosphäre verbunden ist, oder dass diese alternativ über die Modelliereinrichtung mit einem gegenüber der Umgebungsatmosphäre abgetrennten oder abtrennbaren Fluidspeicher verbunden ist.

Ferner kann in Analogie zu den der Arbeitskammer zugeordneten Komponenten der Modelliereinrichtung vorgesehen sein, dass die Modelliereinrichtung auch wenigstens einen der Komplementärarbeitskammer zugeordneten Drosselkanal mit einer Drosseleinrichtung umfasst, wobei auch diese der Komplementärarbeitskammer zugeordnete Drosseleinrichtung sporadisch oder permanent ansteuerbar und damit einstellbar sein kann. Gleichermaßen kann die Modelliereinrichtung auch einen der Komplementärarbeitskammer zugeordneten Bypass-Kanal umfassen, mit welcher die der Komplementärarbeitskammer zugeordnete Drosseleinrichtung umgangen werden kann.

Es ist allerdings darauf hinzuweisen, dass die der Komplementärarbeitskammer zugeordneten Komponenten, Drosseleinrichtung und Bypass-Kanal, umgekehrt zu denen der Arbeitskammer gemäß vorstehender Schilderung angeordnet sein können. Mit anderen Worten bedeutet dies, dass bei einer Freigabe des Pedals nach dessen Betätigung unter der Wirkung des Rückstellelements Fluid über den Bypasskanal in die Komplementärarbeitskammer einströmt. Soll beispielsweise - wie vorstehend bereits hinsichtlich der Arbeitskammer erläutert - die Betätigung des Bremspedals gedämpft erfolgen und die Rückstellbewegung lediglich mit geringer Dämpfung ablaufen, so ist im Rahmen dieser Weiterbildung der Erfindung vorgesehen, dass bei Betätigung des Bremspedals das aus der Komplementärarbeitskammer herausgepresste Fluid durch die der Komplementärarbeitskammer zugeordnete Drosseleinrichtung hindurch strömen muss, und dabei das Rückschlagventil verschließt. Bei einer anschließenden Freigabe des Pedals muss dann Fluid aus der Umgebungsatmosphäre in die Komplementärarbeitskammer einströmen. Dies erfolgt im Wesentlichen über das Rückschlagventil, welches sich in dieser Strömungsrichtung öffnet, so dass nur ein kleiner Anteil des in die Komplementärarbeitskammer einströmenden Fluides durch die Drosseleinrichtung strömt.

In einer Weiterbildung der Erfindung kann ferner vorgesehen sein, dass die Arbeitskammer und die Komplementärarbeitskammer über die Modelliereinrichtung verbunden sind, wobei bei einer Betätigung des Pedals Fluid aus der Komplementärarbeitskammer durch die Modelliereinrichtung hindurch in die Arbeitskammer strömt und wobei bei einer Freigabe des Pedals nach dessen Betätigung Fluid aus der Arbeitskammer durch die Modelliereinrichtung hindurch in die Komplementärarbeitskammer strömt. Bei dieser Erfindungsvariante kann die Modelliereinrichtung eine Drosseleinrichtung sowie einen Bypass-Kanal mit Rückschlagventil umfassen, wobei das Rückschlagventil derart orientiert ist, dass es bei einer Strömung von der Komplementärarbeitskammer in die Arbeitskammer blockiert und sich bei einer gegenläufigen Strömung öffnet. Dies führt dazu, dass bei einer Betätigung des Pedals das Fluid aus der Komplementärarbeitskammer über die Drosseleinrichtung in die Arbeitskammer gesaugt wird, ohne dass sich ein Fluidstrom über den Bypass-Kanal einstellen kann. Nach Freigabe des Pedals wird dann das Pedal und damit der Kolben in den Zylinder unter Wirkung des Rückstellelements in seine Ausgangsstellung zurückgedrängt, wobei das in der Arbeitskammer befindliche Fluid über den Bypass-Kanal bei geöffnetem Rückschlagventil weitgehend ungehindert zurück in die Komplementärarbeitskammer strömen kann.

Die Erfindung wird im Folgenden anhand der beiliegenden Figuren erläutert. Es stellen dar:
- Figur 1: eine schematische Übersichtsdarstellung eines als Bremspedal ausgeführten Pedals;
- Figur 2: eine Detailansicht der Pedalsimulationsvorrichtung gemäß einem ersten Ausführungsbeispiel der vorliegenden Erfindung;
- Figur 3: eine Detailansicht entsprechend Figur 2 gemäß einem zweiten Ausführungsbeispiel der vorliegenden Erfindung;
- Figur 4: eine Detailansicht entsprechend Figuren 2 und 3 gemäß einem dritten Ausführungsbeispiel der vorliegenden Erfindung;
- Figur 5: eine Detailansicht entsprechend den Figuren 2 bis 4 gemäß einem vierten Ausführungsbeispiel der vorliegenden Erfindung und
- Figur 6: ein Kraft-Weg-Diagramm zur näheren Erläuterung der erfindungsgemäßen Pedalsimulationsvorrichtung sowie des Stands der Technik.

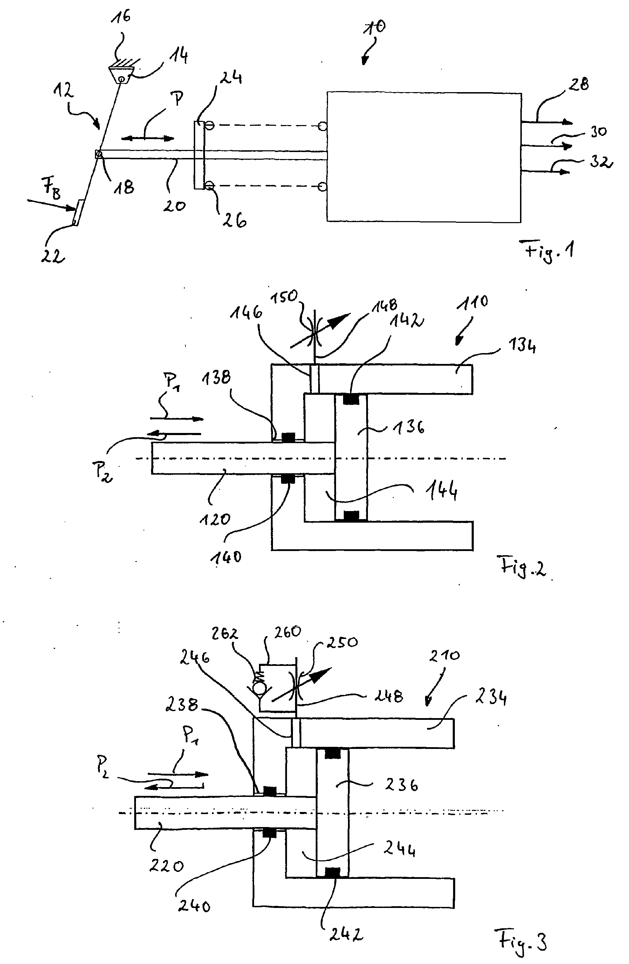

Figur 1 zeigt schematisch, wie eine erfindungsgemäße Pedalsimulationsvorrichtung 10, in diesem beschriebenen Fall als Bremspedalsimulationsvorrichtung ausgeführt, mit einem Bremspedal 12 zusammenwirkt. Das Bremspedal 12 ist an einer Aufhängung 14 an einer Fahrzeugkarosserie 16 drehbar angebracht und über ein Drehgelenk 18 mit einer Betätigungsstange 20 zur gemeinsamen Bewegung gekoppelt. An seinem an der Aufhängung 14 entfernten Ende weist das Bremspedal 12 ein Auflagekissen 22 auf, auf welches ein Fahrer eines Fahrzeugs zur Betätigung dessen Bremse die Bremsbetätigungskraft F_{B} aufbringt, indem er dieses mit seinem Fuß niederdrückt. Nach Beendigung der Bremsung reduziert der Fahrer die Bremsbetätigungskraft F_{B} und gibt das Bremspedal 12 wieder frei.

Die Betätigungsstange 20 mündet in die schematisch dargestellte und nachstehend näher erläuterte Pedalsimulationsvorrichtung 10. An der Betätigungsstange 20 ist ein Anschlag 24 fest angebracht. An diesem stützt sich ein Ende eines federnden Rückstellelements in Gestalt einer Feder 26 ab. Das andere Ende der Feder 26 stützt sich an der dem Bremspedal 12 zugewandten Seite des Gehäuses der Pedalsimulationsvorrichtung 10 ab. Die Feder 26 wird bei Betätigung des Bremspedals 12 und dadurch initiiertes Einschieben der Betätigungsstange 20 in das Gehäuse der Pedalsimulationsvorrichtung 10 komprimiert und bewirkt bei anschließendem Freigeben des Bremspedal 12 eine Rückstellbewegung.

Die Pedalsimulationsvorrichtung 10 umfasst nicht näher gezeigte Sensoren, welche die Betätigung des Bremspedals 12 charakterisierende Parameter, wie beispielsweise die Betätigungsgeschwindigkeit, den Betätigungsweg oder die Größe der Pedalbetätigungskraft F_{B}, erfassen und über die Leitungen 28, 30, 32 zu einer Steuereinheit weiterleiten. Die Steuereinheit steuert dann in der Folge nach Maßgabe der erfassten Parameter die Fahrzeugbremsanlage an, beispielsweise eine hydraulische oder elektromechanische Fahrzeugbremsanlage (jeweils nicht gezeigt).

In der Folge soll der Aufbau und die Funktionsweise der Pedalsimulationsvorrichtung 10 näher erläutert werden. Hierzu wird auf die Figuren 2 bis 5 verwiesen, welche einzelne Ausführungsbeispiele für die Pedalsimulationsvorrichtung 10 zeigen.

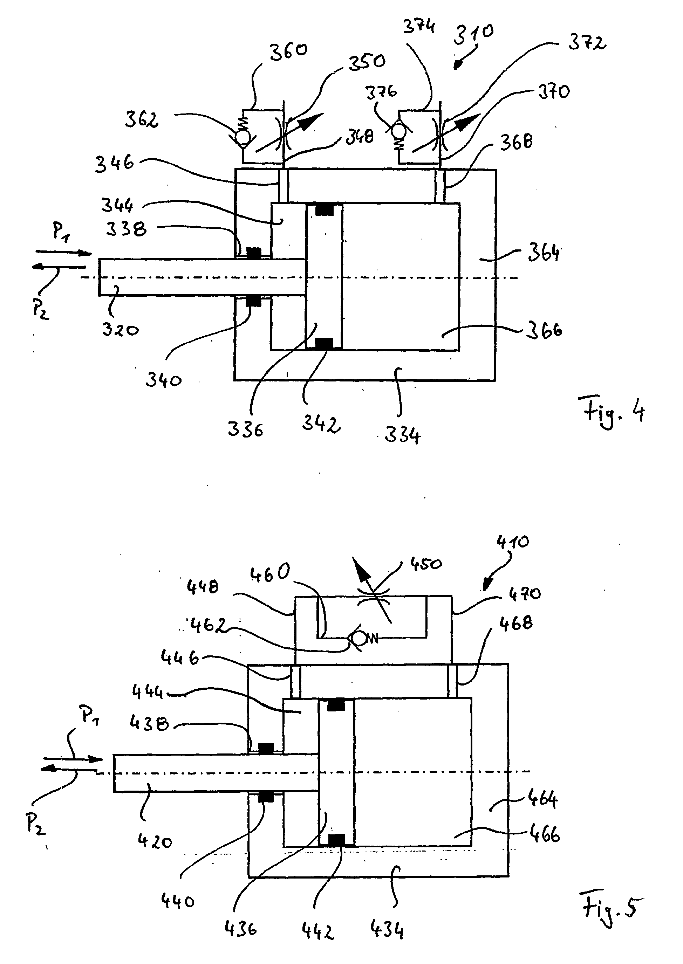

Das in Figur 2 gezeigte erste Ausführungsbeispiel zeigt eine Pedalsimulationsvorrichtung 110 mit einem einseitig offenen Zylinder 134 und einem in diesem geführten Arbeitskolben 136. Der Arbeitskolben 136 ist zur gemeinsamen Bewegung mit der Betätigungsstange 120 gekoppelt. Die Betätigungsstange 120 ist durch eine Axialöffnung 138 hindurch geführt, wobei in der Axialöffnung ein Dichtungsring 140 angeordnet ist. Der Dichtungsring 140 bewirkt, dass die Betätigungsstange 120 fluiddicht innerhalb der Axialöffnung 138 in axialer Richtung hin und her bewegt werden kann, wie dies in Figur 4 durch Pfeil P dargestellt ist.

Auch an dem der Innenwand des Zylinders 134 zugewandten Umfangsfläche des Arbeitskolbens 136 ist ein Dichtungsring 142 vorgesehen, so dass auch der Arbeitskolben 136 fluiddicht innerhalb des Zylinders 134 zusammen mit der Betätigungsstange 120 hin und her bewegt kann.

Somit schließt der Zylinder 134 zusammen mit dem Arbeitskolben 136 und der Betätigungsstange 120 eine ringförmige Arbeitskammer 144 ein. Nahe dem verschlossenen Ende des Zylinders 134 ist in dessen Seitenwand eine Radialöffnung 146 eingebracht. Diese kommuniziert mit einer Fluidleitung 148, welcher eine Drosseleinrichtung 150 zugeordnet ist. Die Drosseleinrichtung 150 ist manuell oder elektromechanisch verstellbar, so dass der Strömungsquerschnitt der Fluidleitung 148 in einem vorgegebenen Rahmen verändert werden kann.

Die Arbeitskammer 144 ist mit Luft gefüllt und kommuniziert bei Öffnung der Fluidleitung 148 bzw. der Drosseleinrichtung 150 mit der Umgebungsatmosphäre.

Wird nun das Bremspedal 12 gemäß Figur 1 durch die Bremsbetätigungskraft F_{B} betätigt, so verschiebt sich die Betätigungsstange 120 entsprechend Pfeil P₁ in Figur 2 nach rechts. Dies führt dazu, dass sich der Kolben 136 zusammen mit der Betätigungsstange 120 innerhalb des Zylinders 134 in Figur 2 nach rechts bewegt. Dadurch wird das Volumen der Arbeitskammer 144 vergrößert, so dass in dieser ein Unterdruck entsteht. Dieser Unterdruck führt dazu, dass die Arbeitskammer 144 über die Radialöffnung 146, die Fluidleitung 148 und die Drosseleinrichtung 150 Luft aus der Umgebungsatmosphäre ansaugt. Die Drosseleinrichtung 150 hemmt jedoch dieses Ansaugen von Umgebungsluft, so dass durch den in der Arbeitskammer 144 entstehenden Unterdruck letztendlich die Bewegung der Betätigungsstange 120 und damit des Bremspedals 12 nur unter Widerstand erfolgen kann. Der Fahrer spürt zusätzlich zu dem durch die Feder 26 bei deren Komprimierung entstehenden Widerstand einen Widerstand, welcher auf die Entstehung des Unterdrucks in der Arbeitskammer 144 zurückgeht. In Abhängigkeit von der Betätigung des Bremspedals 12, d.h. in Abhängigkeit von dem Betrag der angelegten Bremsbetätigungskraft F_{B}, der Geschwindigkeit der Betätigung und des Betätigungswegs des Bremspedals 12 sowie in Abhängigkeit von der Drosselstellung der Drosseleinrichtung 150 ergibt sich jeweils ein Widerstandswert. So ist es möglich, dem Fahrer durch die Pedalsimulationsvorrichtung 110 für die Betätigung des Bremspedals 12 einen Widerstandsverlauf zu vermitteln, welcher diesen glauben lässt, dass das Bremspedal 12 unmittelbar mit der Bremsanlage des Fahrzeugs interagiert. Tatsächlich erfolgt die Interaktion jedoch lediglich über in Figuren 1 und 2 nicht gezeigte Sensoren, welche über die Leitungen 28, 30 und 32 - entsprechend an sich bekannter Brake-by-Wire Bremssystemen - die Betätigung des Bremspedals 12 charakterisierende Parameter an eine Steuereinheit weiterleiten, so dass dann nach Maßgabe der Parameter die Bremsanlage elektronisch angesteuert wird.

Bei einer Freigabe des Bremspedals 12 nach Betätigung, d.h. bei Reduzierung der Bremsbetätigungskraft F_{B} - im Extremfall auf null -, schnellt die Betätigungsstange 120 nicht abrupt aus ihrer Auslenkstellung in die in Figur 1 gezeigte Ausgangsstellung zurück. Vielmehr erfolgt auch die durch die Feder 26 initiierte Rückstellbewegung gedämpft, da dann die in der Arbeitskammer 144 vorhandene und über die Federwirkung der Feder 26 aus dieser herausgedrückte Luft erneut durch die Drosseleinrichtung 150 in die Umgebungsatmosphäre abgegeben werden muss. Dabei wirkt die Drosseleinrichtung 150 wiederum als Dämpfungsglied, so dass die Rückstellbewegung verzögert erfolgt.

Mit dem Ausführungsbeispiel gemäß Figur 2 lässt sich bei einer Betätigung des Bremspedals 12 ein hinreichend schnelles Ansprechen der Pedalsimulationsvorrichtung 110 erreichen, da der in der Arbeitskammer 144 entstehende Unterdruck verhältnismäßig schnell ansteigt und die Drosseleinrichtung 150 zu einem schnell ansteigenden Widerstand gegen die Axialbewegung des Arbeitskolbens 136 führt. Dies lässt sich auch Figur 6 entnehmen, welche ein Diagramm der an dem Arbeitskolben 136 auftretenden Widerstandskraft F_{Arbeltskolben} über den Verstellweg S_{Arbeitskolben} des Arbeitskolbens 136 zeigt.

Betrachtet man in Figur 6 beispielsweise die Kurve 152, welche die Ausführungsform gemäß Figur 2 für eine bestimmte Einstellung der Drosseleinrichtung 150 charakterisiert, so erkennt man, dass zur Erzielung einer bestimmten Widerstandskraft F₁ eine Bewegung des Arbeitskolbens um die Strecke s₁ erforderlich ist. Bis zum Erreichen dieser Widerstandskraft F₁ am Arbeitskolben 136 steigt die Widerstandskraft gemäß der Kurve 152 verhältnismäßig steil an. Mit zunehmendem Volumen der Arbeitskammer 144 verflacht dieser Anstieg jedoch, bis er schließlich einen asymptotischen Verlauf annimmt. Die Kurve 152 entspricht dem Fall, dass zu Beginn einer Betätigung des Bremspedals 12 ein geringes Totvolumen in der Kammer 144 vorhanden ist (S_{Arbeitskolben} ≈ 0). Im Falle eines größeren Totvolumens zu Beginn einer Betätigung des Bremspedals erhält man die durch die Kurve 154 angedeutete Charakteristik. Die Kurve 154 zeigt einen anfangs flacheren Anstieg.

Figur 6 zeigt ferner zwei gestrichelte Kurven, welche den Verlauf der Widerstandskraft am Arbeitskolben bei Systemen gemäß dem eingangs beschriebenen Stand der Technik nach der DE 100 39 670 A1 zeigen. Bei diesen Systemen wird, wie eingangs bereits dargelegt, die Widerstandskraft nicht über einen Unterdruck, sondern über einen in dem Zylinder mittels des verschobenen Arbeitskolbens erzeugten Überdruck generiert. So zeigt die Kurve 156 zu Beginn, d.h. bei kleinem Betätigungsweg, einen deutlich flacheren Anstieg als die Kurve 152, so dass der Arbeitskolben eine erheblich größeren Weg s₂ zurücklegen muss, bis die gewünschte Widerstandskraft F₁ am Arbeitskolben erreicht ist. Dann steigt der durch die Pedalsimulationsvorrichtung erzeugte Widerstand jedoch stärker an. Die Kurve 158 entspricht der Bedämpfung im Falle eines Rückhubs des Bremspedals. Die Fläche zwischen den beiden Kurven 156 und 158 entspricht daher der Hysterese eines Bremspedal-Betätigungszykluses.

Die in Figur 6 dargestellten Kennlinien gelten für den Fall konstanter Betätigungsgeschwindigkeit des Bremspedals 12. Bei einer schnelleren Betätigung wird der Betätigung ein größerer Widerstand entgegengesetzt und umgekehrt. Ein solches Betätigungsverhalten ist erwünscht, da es dem gewohnten Betätigungsverhalten herkömmlicher Bremsanlagen mit einem Unterdruck-Bremskraftverstärker entspricht. Ursache für den von der Betätigungsgeschwindigkeit abhängigen Kennlinienverlauf bei dem Ausführungsbeispiel gemäß Figur 2 ist die Tatsache, dass sich bei geringerer Betätigungsgeschwindigkeit ein geringerer Unterdruck in der Arbeitskammer 144 einstellt als bei hoher Betätigungsgeschwindigkeit. Ursache hierfür ist die Durchströmungscharakteristik der Drosseleinrichtung 150.

Zusammenfassend lässt sich mit Bezug auf Figur 6 feststellen, dass die erfindungsgemäße mit Unterdruck arbeitende Pedalsimulationsvorrichtung schneller auf eine Betätigung des Bremspedals 12 anspricht als die mit Überdruck arbeitenden Pedalsimulationsvorrichtungen gemäß dem Stand der Technik.

Im Folgenden wird das in Figur 3 gezeigte zweite Ausführungsbeispiel der erfindungsgemäßen Pedalsimulationsvorrichtung beschrieben. Zur Erleichterung der Beschreibung und zur Vermeidung von Widerholungen werden dieselben Bezugszeichen verwendet wie mit Bezug auf Figuren 1 und 2, jedoch mit der Ziffer "2" vorangestellt. Es werden lediglich die Unterschiede zu der ersten Ausführungsform gemäß Figur 2 beschrieben.

Die zweite Ausführungsform gemäß Figur 3 unterscheidet sich von der ersten Ausführungsform gemäß Figur 2 lediglich darin, dass die Fluidleitung 248, welche mit der Radialöffnung 246 gekoppelt ist, eine Bypass-Leitung 260 umfasst, welche die Drosseleinrichtung 250 umgeht. In der Bypass-Leitung 260 ist ein Rückschlagventil 262 vorgesehen, welches eine Luftströmung aus der Umgebungsatmosphäre in die Radialöffnung 246 und damit in die Arbeitskammer 244 blockiert. Eine entgegengesetzte Luftströmung, d.h. eine Luftströmung aus der Arbeitskammer 244 durch die Radialöffnung 246 zur Umgebungsatmosphäre hin kann das Rückschlagventil 262 jedoch weitgehend ungehindert passieren.

Die Pedalsimulationsvorrichtung 210 gemäß Figur 3 verhält sich daher im Betrieb insofern abweichend von der Pedalsimulationsvorrichtung 110 gemäß Figur 2, als bei einer Rückstellbewegung der Betätigungsstange 20 und damit des Arbeitskolbens 236 entsprechend Pfeil P₂ die in der Arbeitskammer 244 enthaltene Luft weitgehend ungehindert in die Umgebungsatmosphäre austreten kann, wobei die Drosseleinrichtung 250 über die Bypass-Leitung 260 umgangen wird. Dies bedeutet, dass sich das Bremspedal 12 unter Wirkung der Feder 26 und weitgehend ohne Dämpfung durch die Drosseleinrichtung 250 relativ schnell in seine Ausgangsstellung zurückbewegen kann. Hingegen wirkt die Drosseleinrichtung 250 gegenüber dem Ausführungsbeispiel gemäß Figur 2 bei dem zweiten Ausführungsbeispiel gemäß Figur 3 unverändert, da das Rückschlagventil 262 dann schließt, wenn in die Arbeitskammer 244 Luft aus der Umgebungsatmosphäre angesaugt wird, und eine Luftströmung durch die Bypass-Leitung 260 blockiert.

Figur 4 zeigt ein drittes Ausführungsbeispiel der erfindungsgemäßen Pedalsimulationsvorrichtung 310. Es werden für die gleichen oder gleich wirkenden Komponenten dieselben Bezugszeichen wie mit Bezug auf Figuren 1 bis 3 eingesetzt, jedoch mit der Ziffer "3" vorangestellt.

Die dritte Ausführungsform gemäß Figur 4 unterscheidet sich von der zweiten Ausführungsform gemäß Figur 3 darin, dass der Zylinder 334 nicht mehr einseitig offen, sondern an seiner von der Betätigungsstange 320 entfernten Seite durch die Stirnwand 364 verschlossen ist. Dadurch ist in dem Zylinder 334 neben der Arbeitskammer 344 eine Komplementärarbeitskammer 366 vorhanden, die einseitig von dem Arbeitskolben 336 begrenzt wird. In diese Komplementärarbeitskammer 366 mündet nahe der Stirnwand 364 eine weitere Radialöffnung 368. Die Radialöffnung 368 kommuniziert mit einer Fluidleitung 370, welche einerseits einen Drosselkanal mit einer verstellbaren Drosseleinrichtung 372 und andererseits einen Bypass-Kanal 374 mit einem Rückschlagventil 376 umfasst. Das Rückschlagventil 376 ist derart angeordnet, dass es eine Luftströmung aus der Umgebungsatmosphäre durch die Bypass-Leitung 374 hindurch über die Radialöffnung 368 in die Komplementärarbeitskammer 366 ungehindert zulässt, hingegen eine Luftströmung aus der Komplementärarbeitskammer 366 heraus über die Radialöffnung 368 blockiert. Dies führt dazu, dass bei einer Bewegung der Betätigungsstange 320 und des Arbeitskolbens 336 in Richtung Pfeil P₁ die in der Komplementärarbeitskammer 366 enthaltene Luft durch die Drosseleinrichtung 372 hindurch strömen muss und dadurch das Ausströmen durch die Drosseleinrichtung 372 gedämpft wird. Bei einer Bewegung der Betätigungsstange 320 und des Arbeitskolbens 336 entsprechend Pfeil P₂ hingegen kann Luft aus der Umgebungsatmosphäre im Wesentlichen ungehindert durch das Rückschlagventil 376 über die Radialöffnung 368 in die Komplementärarbeitskammer 366 einströmen, so dass diese Bewegung im Wesentlichen nicht durch die Drosseleinrichtung 372 gedämpft bzw. gehemmt wird.

Die Pedalsimulationsvorrichtung gemäß Figur 4 zeigt ein gegenüber den Pedalsimulationsvorrichtungen gemäß Figuren 2 und 3 dahingehend geändertes Rückwirkverhalten auf das Bremspedal 12, dass sich mit zunehmendem Verstellweg des Arbeitskolbens 336 innerhalb des Zylinders 334 der Druck innerhalb der Komplementärarbeitskammer 366 mehr und mehr erhöht. Dies führt dazu, dass dann, wenn der Anstieg des Unterdrucks in der Arbeitskammer 344 mit zunehmendem Verstellweg des Arbeitskolbens 336 abflacht, wie mit Bezug auf Kurve 152 in Figur 6 erläutert, die Wirkung der Komplementärarbeitskammer 366, in welcher sich ein Überdruck aufbaut, ausgenutzt wird. Dadurch erhöht sich die auf das Bremspedal 12 rückwirkende Widerstandskraft auch bei zunehmender Verstellbewegung des Arbeitskolbens 336 für den Fahrer spürbar.

Mit anderen Worten zeigt die Pedalsimulationsvorrichtung 310 gemäß Figur 4 ein verhältnismäßig schnelles Ansprechen, wobei sich auch bei starker bzw. lang andauernder Betätigung des Bremspedals 12 mit hinreichend hoher Bremsbetätigungskraft F_{B} und entsprechend großem Bremspedalweg der auf das Bremspedal rückwirkende Widerstand weiter spürbar erhöht.

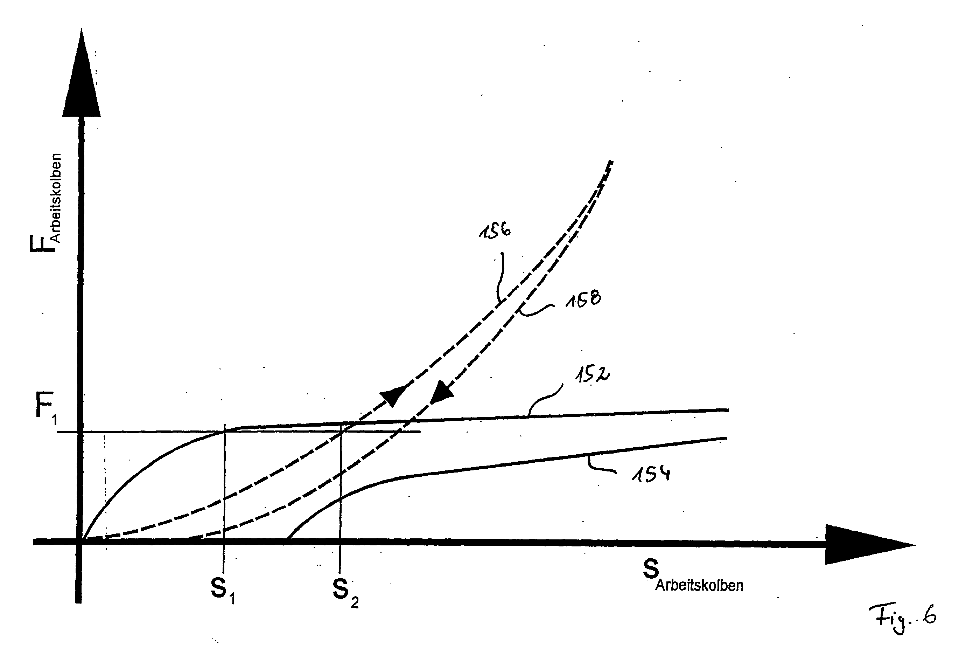

Figur 5 zeigt schließlich ein viertes Ausführungsbeispiel der erfindungsgemäßen Pedalsimulationsvorrichtung 410 . Bei der Beschreibung dieses Ausführungsbeispiels werden wiederum die vorangehend benutzten Bezugszeichen für gleichartige oder gleichwirkende Komponenten verwendet, jedoch mit der Ziffer "4" vorangestellt.

Das vierte Ausführungsbeispiel gemäß Figur 5 unterscheidet sich von dem dritten Ausführungsbeispiel gemäß Figur 4 lediglich darin, dass die beiden Fluidleitungen 448 und 470 miteinander verbunden sind, wobei diese eine gemeinsame Drosseleinrichtung 450 und einen gemeinsamen die Drosseleinrichtung 450 umgehenden Bypass-Kanal 460 mit dem Rückschlagventil 462 aufweisen. Dieser Aufbau führt dazu, dass bei einer Bewegung der Betätigungsstange 420 und des Arbeitskolbens 436 entsprechend Pfeil P₁ - ohne Luftaustausch mit der Umgebungsatmosphäre - Luft aus der Komplementärarbeitskammer 466 über die Radialöffnung 468, die Drosseleinrichtung 450, die Radialöffnung 446 in die Arbeitskammer 444 eingesaugt wird. Dies erfolgt gedrosselt, wobei sich das Rückschlagventil 462 verschließt, so dass keine Luftströmung über den Bypass-Kanal 460 erfolgen kann. Eine derartige Bewegung der Betätigungsstange 420 entsprechend Pfeil P₁ wird daher gedämpft. Bei einer gegenläufigen Bewegung entsprechend Pfeil P₂ hingegen wird Luft aus der Arbeitskammer 444 über die Radialöffnung 446 in die Fluidleitung 448 hineingedrückt. Bei dieser Strömungsrichtung der Luft öffnet sich das Rückschlagventil 462, so dass die Luft im Wesentlichen unter Umgehung der Drosseleinrichtung 450 in die Fluidleitung 470 und die Radialöffnung 468 einströmt und durch diese in die Komplementärarbeitskammer 466 einströmen kann. Die Pedalsimulationsvorrichtung 410 gemäß dem vierten Ausführungsbeispiel nach Figur 5 zeigt somit ähnliches Rückwirkverhalten auf das Bremspedal 12 wie die Pedalsimulationsvorrichtung 210 gemäß Figur 3. Ein Vorteil der vierten erfindungsgemäßen Ausführungsform gemäß Fig. 5 liegt darin, dass es sich dabei um ein geschlossenes pneumatisches System handelt, welches keinen Verunreinigen durch eintretende Umgebungsluft ausgesetzt ist.

Es sei darauf hingewiesen, dass die vorstehend mit Bezug auf Figuren 2 bis 6 beschriebenen Ausführungsformen beliebig untereinander kombiniert werden können, um verschiedene Kennlinien des Rückwirkverhaltens zu erzeugen.

Vorstehend wurde dargelegt, dass mit der Erfindung Pedalsimulationsvorrichtungen verschiedener Ausgestaltung bereitgestellt werden können, welche verhältnismäßig schnell auf eine Betätigung des Bremspedals ansprechen. Es ist darauf hinzuweisen, dass die verwendeten verstellbaren Drosseleinrichtungen manuell bei der Montage und bei einer Wartung verstellbar sein können. Gleichermaßen ist es auch möglich, dass diese Drosseleinrichtungen im Betrieb der Bremsanlage permanent, beispielsweise elektromechanisch ansteuerbar sind, um deren Drosselverhalten und damit das Verhalten der Pedalsimulationsvorrichtung zu verändern. So kann beispielsweise zwischen einer sportlichen Einstellung, in welcher das Pedal relativ schnell und stark anspricht, und einer gemäßigten Einstellung umgeschaltet werden, in welcher das Pedal leicht verzögert und verhältnismäßig sanft anspricht. Es ist ferner darauf hinzuweisen, wie vorstehend bereits mehrfach angedeutet, dass die Drosseleinrichtungen gemäß der vorliegenden Erfindung vorrangig zur Dämpfung der Kolbenbewegung bei einer Betätigung des Bremspedals eingesetzt werden, dass diese jedoch gleichermaßen, wie dies auch mit Bezug auf Figur 2 erläutert, bei einer Rückhubbewegung des Arbeitskolbens, d.h. bei einer Rückstellbewegung, Drosselwirkung zeigen und somit auch diese Bewegung dämpfen können.

## Patentansprüche

1. Pedalsimulationsvorrichtung (10; 110; 210; 310; 410) zum Simulieren des Rückwirkverhaltens eines Pedals (12), insbesondere eines Bremspedals einer Fahrzeugbremsanlage, mit
- einem Zylinder (134; 234; 334; 434),
- einem innerhalb des Zylinders (134; 234; 334; 434) verschiebbar angeordneten Kolben (136; 236; 336; 436), welcher mit dem Pedal (12) gekoppelt ist und welcher eine Arbeitskammer (144; 244; 344; 444) innerhalb des Zylinders (134; 234; 334; 434) begrenzt,
- einem Rückstellelement (26), welches in der Lage ist eine Rückstellkraft auf das Pedal (12) auszuüben, und
- einer Modelliereinrichtung zum Beeinflussen des Rückwirkverhaltens des Pedals (12), welche mit der Arbeitskammer (144; 244; 344; 444) fluidisch verbunden ist,
**dadurch gekennzeichnet,**
**dass** sich bei einer Betätigung des Pedals (12) ein Unterdruck in der Arbeitskammer (144; 244; 344; 444) aufbaut.

2. Pedalsimulationsvorrichtung (10; 110; 210; 310) nach Anspruch 1,
**dadurch gekennzeichnet, dass** die Modelliereinrichtung die Arbeitskammer (144; 244; 344) mit der Umgebungsatmosphäre verbindet.

3. Pedalsimulationsvorrichtung (410) nach Anspruch 1,
**dadurch gekennzeichnet, dass** die Modelliereinrichtung die Arbeitskammer (444) mit einem gegenüber der Umgebungsatmosphäre abgetrennten oder abtrennbaren Fluidspeicher (464) verbindet.

4. Pedalsimulationsvorrichtung (10; 110; 210; 310; 410) nach einem der Ansprüche 1 bis 3,
**dadurch gekennzeichnet, dass** die Modelliereinrichtung wenigstens einen Drosselkanal mit einer Drosseleinrichtung (150; 250; 350, 372; 450) umfasst.

5. Pedalsimulationsvorrichtung nach Anspruch 4,
**dadurch gekennzeichnet, dass** die Drosseleinrichtung (150; 250; 350, 372; 450) verstellbar ist.

6. Pedalsimulationsvorrichtung (10; 210; 310; 410) nach einem der vorangehenden Ansprüche,
**dadurch gekennzeichnet, dass** die Modelliereinrichtung einen Bypass-Kanal (260; 360, 374; 460) umfasst, welcher den Drosselkanal umgeht.

7. Pedalsimulationsvorrichtung (10; 210; 310; 410) nach Anspruch 6,
**dadurch gekennzeichnet, dass** bei einer Freigabe des Pedals (12) nach dessen Betätigung unter der Wirkung des Rückstellelements (26) Fluid aus der Arbeitskammer (244; 344; 444) über den Bypasskanal (260; 360, 374; 460) ausströmt.

8. Pedalsimulationsvorrichtung (10; 210; 310; 410) nach Anspruch 6 oder 7,
**dadurch gekennzeichnet, dass** der Bypasskanal (260; 360, 374; 460) ein Rückschlagventil (262; 362, 376; 462) aufweist, welches ein Austreten von Fluid aus der Arbeitskammer (244; 344; 444) im Wesentlichen ungehindert zulässt und ein Eintreten von Fluid in die Arbeitskammer (244; 344; 444) blockiert.

9. Pedalsimulationsvorrichtung (310; 410) nach einem der vorangehenden Ansprüche,
**dadurch gekennzeichnet, dass** der Zylinder (334; 434) an seinem von der Arbeitskammer (344; 444) entfernten Ende verschlossen ist und zusammen mit dem Kolben (336; 436) eine Komplementärarbeitskammer (366; 466) einschließt und dass bei einer Betätigung des Pedals (12) Fluid aus der Komplementärarbeitskammer (366; 466) durch die Modelliereinrichtung hindurch strömt.

10. Pedalsimulationsvorrichtung (10; 310) nach Anspruch 9,
**dadurch gekennzeichnet, dass** die Modelliereinrichtung die Komplementärarbeitskammer (334) mit der Umgebungsatmosphäre verbindet.

11. Pedalsimulationsvorrichtung (410) nach Anspruch 9,
**dadurch gekennzeichnet, dass** die Modelliereinrichtung die Komplementärarbeitskammer (466) mit einem gegenüber der Umgebungsatmosphäre abgetrennten oder abtrennbaren Fluidspeicher (444) verbindet.

12. Pedalsimulationsvorrichtung (10; 310; 410) nach einem der Ansprüche 9 bis 11,
**dadurch gekennzeichnet, dass** die Modelliereinrichtung wenigstens einen der Komplementärarbeitskammer zugeordneten Drosselkanal mit einer Drosseleinrichtung umfasst.

13. Pedalsimulationsvorrichtung (10; 310; 410) nach Anspruch 12,
**dadurch gekennzeichnet, dass** die der Komplementärarbeitskammer (366; 466) zugeordnete Drosseleinrichtung (372; 450) verstellbar ist.

14. Pedalsimulationsvorrichtung (10; 310; 410) nach einem der Ansprüche 9 bis 13,
**dadurch gekennzeichnet, dass** die Modelliereinrichtung einen der Komplementärarbeitskammer (366; 466) zugeordneten Bypass-Kanal (374; 460) umfasst, welcher die der Komplementärarbeitskammer zugeordnete Drosseleinrichtung (366; 466) umgeht.

15. Pedalsimulationsvorrichtung (10; 310; 410) nach Anspruch 14,
**dadurch gekennzeichnet, dass** bei einer Freigabe des Pedals (12) nach dessen Betätigung unter der Wirkung des Rückstellelements Fluid über den Bypasskanal (374; 460) in die Komplementärarbeitskammer (366; 466) einströmt.

16. Pedalsimulationsvorrichtung (10; 410) nach einem der Ansprüche 9 bis 15,
**dadurch gekennzeichnet, dass** die Arbeitskammer (444) und die Komplementärarbeitskammer (466) über die Modelliereinrichtung verbunden sind, wobei bei einer Betätigung des Pedals (12) Fluid aus der Komplementärarbeitskammer (466) durch die Modelliereinrichtung hindurch in die Arbeitskammer (444) strömt und dass bei einer Freigabe des Pedals (12) nach dessen Betätigung Fluid aus der Arbeitskammer (444) durch die Modelliereinrichtung hindurch in die Komplementärarbeitskammer (466) strömt.

## Claims

1. Pedal simulation device (10; 110; 210; 310; 410) for simulating the reaction behaviour of a pedal (12), in particular of a brake pedal of a vehicle brake system, comprising
- a cylinder (134; 234; 334; 434),
- a piston (136; 236; 336; 436) disposed displaceably inside the cylinder (134; 234; 334; 434) and coupled to the pedal (12) and delimiting a working chamber (144; 244; 344; 444) inside the cylinder (134; 234; 334; 434),
- a resetting element (26) capable of exerting a resetting force on the pedal (12), and
- a modelling device, which is fluidically connected to the working chamber (144; 244; 344; 444), for influencing the reaction behaviour of the pedal (12),
**characterized in**
**that**, upon an actuation of the pedal (12), a vacuum builds up in the working chamber (144; 244; 344; 444).

2. Pedal simulation device (10; 110; 210; 310) according to claim 1,
**characterized in that** the modelling device connects the working chamber (144; 244; 344) to the ambient atmosphere.

3. Pedal simulation device (410) according to claim 1,
**characterized in that** the modelling device connects the working chamber (444) to a fluid reservoir (464) that is separated or separable from the ambient atmosphere.

4. Pedal simulation device (10; 110; 210; 310; 410) according to one of claims 1 to 3,
**characterized in that** the modelling device comprises at least one throttle channel having a throttle device (150; 250; 350, 372; 450).

5. Pedal simulation device according to claim 4,
**characterized in that** the throttle device (150; 250; 350, 372; 450) is adjustable.

6. Pedal simulation device (10; 210; 310; 410) according to one of the preceding claims,
**characterized in that** the modelling device comprises a bypass channel (260; 360, 374; 460) that bypasses the throttle channel.

7. Pedal simulation device (10; 210; 310; 410) according to claim 6,
**characterized in that**, upon a release of the pedal (12) after actuation thereof under the action of the resetting element (26) fluid flows out of the working chamber (244; 344; 444) through the bypass channel (260; 360, 374; 460).

8. Pedal simulation device (10; 210; 310; 410) according to claim 6 or 7,
**characterized in that** the bypass channel (260; 360, 374; 460) comprises a non-return valve (262; 362, 376; 462), which allows fluid to pass substantially unimpeded out of the working chamber (244; 344; 444) and prevents fluid from passing into the working chamber (244; 344; 444).

9. Pedal simulation device (310; 410) according to one of the preceding claims,
**characterized in that** the cylinder (334; 434) is closed at its end remote from the working chamber (344; 444) and together with the piston (336; 436) encloses a complementary working chamber (366; 466) and that, upon an actuation of the pedal (12), fluid flows out of the complementary working chamber (366; 466) through the modelling device.

10. Pedal simulation device (10; 310) according to claim 9,
**characterized in that** the modelling device connects the complementary working chamber (334) to the ambient atmosphere.

11. Pedal simulation device (410) according to claim 9,
**characterized in that** the modelling device connects the complementary working chamber (466) to a fluid reservoir (444) that is separated or separable from the ambient atmosphere.

12. Pedal simulation device (10; 310; 410) according to one of claims 9 to 11,
**characterized in that** the modelling device comprises at least one throttle channel associated with the complementary working chamber and having a throttle device.

13. Pedal simulation device (10; 310; 410) according to claim 12,
**characterized in that** the throttle device (372; 450) associated with the complementary working chamber (366; 466) is adjustable.

14. Pedal simulation device (10; 310; 410) according to one of claims 9 to 13,
**characterized in that** the modelling device comprises a bypass channel (374; 460), which is associated with the complementary working chamber (366; 466) and bypasses the throttle device (366; 466) associated with the complementary working chamber.

15. Pedal simulation device (10; 310; 410) according to claim 14,
**characterized in that**, upon a release of the pedal (12) after actuation thereof, under the action of the resetting element fluid flows through the bypass channel (374; 460) into the complementary working chamber (366; 466).

16. Pedal simulation device (10; 410) according to one of claims 9 to 15,
**characterized in that** the working chamber (444) and the complementary working chamber (466) are connected via the modelling device, wherein, upon an actuation of the pedal (12), fluid from the complementary working chamber (466) flows through the modelling device into the working chamber (444) and that, upon a release of the pedal (12) after actuation thereof, fluid from the working chamber (444) flows through the modelling device into the complementary working chamber (466).

## Revendications

1. Dispositif de simulation de pédale (10; 110; 210; 310; 410) pour simuler le comportement de réaction d'une pédale (12), en particulier d'une pédale de frein d'une installation de freinage d'un véhicule automobile, comportant
- un cylindre (134; 234; 334; 434),
- un piston (136; 236; 336; 436) disposé coulissant à l'intérieur du cylindre (134; 234; 334; 434), ce piston étant couplé à la pédale (12) et délimitant une chambre de travail (144; 244; 344; 444) à l'intérieur du cylindre (134; 234; 334; 434),
- un organe de rappel (26), qui peut exercer une force de rappel sur la pédale (12), et
- un dispositif de modélisation pour agir sur le comportement de réaction de la pédale (12), dispositif qui est relié par fluide à la chambre de travail (144; 244; 344; 444),
**caractérisé en ce qu'**une dépression se crée dans la chambre de travail (144; 244; 344; 444) lors d'un actionnement de la pédale (12).

2. Dispositif de simulation de pédale (10; 110; 210; 310) suivant la revendication 1, **caractérisé en ce que** le dispositif de modélisation relie la chambre de travail (144; 244; 344) à l'atmosphère environnante.

3. Dispositif de simulation de pédale (410) suivant la revendication 1, **caractérisé en ce que** le dispositif de modélisation relie la chambre de travail (444) à un accumulateur de fluide (464) séparé ou séparable de l'atmosphère environnante.

4. Dispositif de simulation de pédale (10; 110; 210; 310; 410) suivant l'une des revendications 1 à 3, **caractérisé en ce que** le dispositif de modélisation comprend au moins un canal d'étranglement comportant un dispositif d'étranglement (150; 250; 350, 372; 450).

5. Dispositif de simulation de pédale suivant la revendication 4, **caractérisé en ce que** le dispositif d'étranglement (150; 250; 350, 372; 450) est réglable.

6. Dispositif de simulation de pédale (10; 210; 310; 410) suivant l'une des revendications précédentes, **caractérisé en ce que** le dispositif de modélisation comporte un canal de dérivation (260; 360, 374; 460), qui contourne le canal d'étranglement.

7. Dispositif de simulation de pédale (10; 210; 310; 410) suivant la revendication 6, **caractérisé en ce que**, lorsque la pédale (12) est libérée après son actionnement sons l'action de l'organe de rappel (26), du fluide s'écoule de la chambre de travail (144; 244; 344; 444) par le canal de dérivation (260; 360, 374; 460).

8. Dispositif de simulation de pédale (10; 210; 310; 410) suivant la revendication 6 ou 7, **caractérisé en ce que** le canal de dérivation (260; 360, 374; 460) présente un clapet anti-retour (262; 362, 376; 462) qui permet une sortie sensiblement libre de fluide venant de la chambre de travail (244; 344; 444), et qui bloque une entrée de fluide dans la chambre de travail (244; 344; 444).

9. Dispositif de simulation de pédale (310; 410) suivant l'une des revendications précédentes, **caractérisé en ce que** le cylindre(334; 434) est fermé à son extrémité éloignée de la chambre de travail (144; 244; 344; 444) et enferme, ensemble avec le piston (336; 436), une chambre de travail complémentaire (366; 466), et **en ce que**, lors d'un actionnement de la pédale (12), du fluide s'écoule de la chambre de travail complémentaire (366; 466) en traversant le dispositif de modélisation.

10. Dispositif de simulation de pédale (10; 310) suivant la revendication 9, **caractérisé en ce que** le dispositif de modélisation relie la chambre de travail complémentaire (344) à l'atmosphère environnante.

11. Dispositif de simulation de pédale (410) suivant la revendications 9, **caractérisé en ce que** le dispositif de modélisation relie la chambre de travail complémentaire (466) à un accumulateur de pression (444) séparé ou séparable de l'atmosphère environnante.

12. Dispositif de simulation de pédale (10; 310; 410) suivant l'une des revendications 9 à 11, **caractérisé en ce que** le dispositif de modélisation comporte au moins un canal d'étranglement associé à la chambre de travail complémentaire et comportant un dispositif d'étranglement.

13. Dispositif de simulation de pédale (10; 310; 410) suivant la revendication 12, **caractérisé en ce que** le dispositif d'étranglement (372; 450) associé à la chambre de travail complémentaire (366; 466) est réglable.

14. Dispositif de simulation de pédale (10; 310; 410) suivant l'une des revendications 9 à 13, **caractérisé en ce que** le dispositif de modélisation comporte un canal de dérivation (374; 460) associé à la chambre de travail complémentaire (366; 466) et qui contourne le canal d'étranglement (366; 466) associé à la chambre de travail complémentaire (366; 466).

15. Dispositif de simulation de pédale (10; 310; 410) suivant la revendication 14, **caractérisé en ce que**, lorsque la pédale (12) est libérée après son actionnent sous l'effet de l'organe de rappel (26), du fluide pénètre par le canal de dérivation (374; 460) dans la chambre de travail complémentaire (366; 466).

16. Dispositif de simulation de pédale (10; 410) suivant l'une des revendication 9 à 15, **caractérisé en ce que** la chambre de travail (444) et la chambre de travail complémentaire (466) sont reliées par le dispositif de modélisation, du fluide s'écoulant, lors d'un actionnement de la pédale (12), de la chambre de travail complémentaire (466) dans la chambre de travail (444) en traversant le dispositif de modélisation et **en ce que**, lorsque la pédale (12) est libérée après son actionnement, du fluide s'écoule de la chambre de travail (444) dans la chambre de travail complémentaire (466) en traversant le dispositif de modélisation.
